# FASCICULE DE BREVET EUROPEEN

(11) **EP 3 298 298 B1**
(45) Date de publication et mention de la délivrance du brevet: **16.09.2020**
(21) Numéro de dépôt: 16727768.0
(22) Date de dépôt: 17.05.2016
(51) Int. Cl.: F16D 67/02, A01D 34/68, F16D 43/20, F16D 125/36

(54) **BOITIER DE TRANSMISSION ET SON PROCEDE DE FERMETURE ET ENGIN EQUIPE D'UN TEL BOITIER DE TRANSMISSION**
ÜBERSETZUNGSGETRIEBEKASTEN UND VERFAHREN ZUM SCHLIESSEN DAVON UND MIT SOLCH EINEM ÜBERSETZUNGSGETRIEBEKASTEN AUSGESTATTETES FAHRZEUG
TRANSMISSION GEAR BOX AND METHOD OF CLOSING SAME AND VEHICLE EQUIPPED WITH SUCH A TRANSMISSION GEAR BOX

(30) Priorité: 19.05.2015 FR 1554465; 19.05.2015 FR 1554467; 19.05.2015 FR 1554470; 19.05.2015 FR 1554471; 19.05.2015 FR 1554463
(43) Date de publication de la demande: 28.03.2018
(73) Titulaire: France Reducteurs, 85500 Les Herbiers (FR)
(72) Inventeur: BARENDRECHT, Wouter, 49300 Cholet (FR)
(74) Mandataire: Godineau, Valérie
(86) Numéro de dépôt international: PCT/FR2016/051155
(87) Numéro de publication internationale: WO 2016/185128

(56) Documents cités:
- WO-A1-2013/104191
- CN-A- 104 154 148
- DE-A1-102006 036 522
- FR-A1- 2 885 655
- FR-A1- 2 995 647
- FR-A1- 3 004 771
- US-A1- 2013 220 073

## Description

La présente invention concerne un boîtier de transmission et son procédé de fermeture, ainsi qu'un engin équipé d'un tel boîtier de transmission.

Elle concerne plus particulièrement un boîtier de transmission du type comprenant deux éléments de boîtier positionnables en applique l'un contre l'autre et délimitant, à l'état assemblé, une cavité, un arbre faisant au moins partiellement saillie du boîtier, un mécanisme de transmission de mouvement audit arbre, ce mécanisme de transmission de mouvement étant logé au moins partiellement à l'intérieur de la cavité du boîtier et des moyens d'étanchéité disposés au niveau de la zone d'applique des éléments de boîtier et appelée plan de joint, ces moyens d'étanchéité entourant ladite cavité, ces moyens d'étanchéité étant des moyens de liaison par collage des éléments de boîtier. De tels boîtiers de transmission sont remplis d'un agent de lubrification nécessaire au bon fonctionnement du mécanisme de transmission. Il est donc nécessaire que l'étanchéité soit parfaite, d'où la présence de colle au niveau du plan de joint entre les éléments de boîtier comme l'illustrent les brevets FR-3.004.771, FR-2.995.647 ou FR-2.885.655.

Jusqu'à présent, la gorge de réception de colle est formée de deux rainures en regard ménagées chacune au niveau d'un élément de boîtier comme l'illustre le brevet FR-2.995.647. Il en résulte un collage qui n'est pas toujours parfait.

Un but de la présente invention est de proposer un boîtier de transmission du type précité dont la conception des moyens d'étanchéité permet d'améliorer la qualité du collage.

A cet effet, l'invention a pour objet un boîtier de transmission du type comprenant les caractéristiques de la revendication 1.

Grâce à cette coopération mâle/femelle, il en résulte une augmentation des surfaces de collage et par suite, une amélioration de l'efficacité du collage ainsi qu'une facilité de positionnement des éléments de boîtier l'un par rapport à l'autre.

Selon un mode de réalisation, les moyens de liaison par collage comprennent au moins une gorge auxiliaire doublant la gorge principale à l'état assemblé desdits éléments de boîtier. La présence d'au moins une gorge auxiliaire doublant la gorge principale permet de récupérer dans ladite gorge l'excédent de colle déposé dans la gorge principale. La ou chaque gorge auxiliaire est donc apte à récupérer l'excédent de colle issu de la gorge principale.

Selon un mode de réalisation, la ou au moins l'une des gorges auxiliaires double ladite gorge principale extérieurement, en entourant ladite gorge principale.

Selon un mode de réalisation, la ou au moins l'une des gorges auxiliaires double ladite gorge principale intérieurement, en s'étendant à l'intérieur du périmètre délimité par la gorge principale.

De préférence, les moyens de liaison par collage comprennent au moins deux gorges auxiliaires disposées de part et d'autre de la gorge principale.

Grâce à la présence d'une gorge principale et de deux gorges auxiliaires entourant la gorge principale et disposées l'une entre la gorge principale et l'intérieur du boîtier, l'autre entre la gorge principale et l'extérieur du boîtier, il est possible, dans toutes les situations, d'absorber un éventuel excès de colle déposé. La présence d'une gorge auxiliaire entre la gorge principale et l'intérieur du boîtier permet d'éviter à la colle en excès de pénétrer à l'intérieur du boîtier et de venir potentiellement polluer l'agent de lubrification à l'intérieur du boîtier. La présence d'une gorge auxiliaire entre la gorge principale et l'extérieur du boîtier permet d'éviter à la colle en excès de sortir du boîtier pour former des bavures au niveau du plan de joint du boîtier, ces bavures étant inesthétiques et devant être éliminées.

De préférence, les moyens de liaison des éléments de boîtier par encliquetage comprennent une pluralité d'organes élastiquement déformables s'étendant sur le pourtour de l'un des éléments du boîtier, lesdits organes élastiquement déformables étant aptes à coopérer par venue en prise avec des organes complémentaires portés par l'autre élément de boîtier à l'état appliqué l'un contre l'autre des éléments de boîtier.

En particulier, les moyens de liaison des éléments de boîtier par encliquetage comprennent une pluralité de créneaux évidés en forme d'anses disposés sur le pourtour de l'un des éléments de boîtier pour former ladite pluralité d'organes élastiquement déformables et une pluralité d'ergots disposés sur le pourtour de l'autre des éléments de boîtier pour former lesdits organes complémentaires, chaque ergot étant apte à s'insérer dans une anse à l'état appliqué l'un contre l'autre des éléments de boîtier.

La présence de ces moyens de liaison par encliquetage permet à l'opérateur, une fois les éléments de boîtier appliqués l'un contre l'autre, de poser le boîtier sans avoir à maintenir les éléments de boîtier en applique l'un contre l'autre jusqu'à la prise de colle.

De préférence, le boîtier est un boîtier de transmission pour un engin roulant et l'arbre qui fait au moins partiellement saillie du boîtier est un arbre d'entrainement de roues d'une même paire de roues de l'engin, cet arbre d'entraînement de roues réalisé d'un seul tenant ou en au moins deux sections d'arbre d'entraînement de roue coaxiales aptes à entraîner chacune une roue d'une même paire de roues de l'engin s'étendant transversalement, de préférence orthogonalement, audit plan de joint à l'état assemblé des deux éléments de boîtier.

De préférence, le mécanisme le transmission de mouvement audit arbre d'entrainement de roues comprend des moyens menants moteurs, un organe mené rotatif, tel qu'une roue dentée, en prise permanente avec les moyens menants moteurs d'entraînement en rotation dudit organe mené, lesdits moyens menants moteurs comprenant un moteur équipé d'un arbre moteur mené s'étendant, de préférence, parallèlement à l'axe longitudinal de l'arbre d'entraînement de roues et, disposé entre l'arbre d'entraînement de roues, ou chacune des sections d'arbre d'entraînement de roue, et l'organe mené, un mécanisme d'embrayage, le ou chaque mécanisme d'embrayage, étant activé par l'entraînement en rotation de l'organe mené suivant un premier sens d'entraînement en rotation dit marche avant, et désactivable par l'entraînement en rotation en marche avant de l'arbre ou de la section d'arbre d'entraînement de roue avec lequel il coopère, lorsque la vitesse de rotation de l'arbre ou de ladite section d'arbre d'entraînement de roue est supérieure à la vitesse de rotation de l'organe mené, l'arbre d'entraînement de roues ou chaque section d'arbre d'entraînement de roue étant, à l'état désactivé du mécanisme d'embrayage correspondant, libre de tourner dans l'un quelconque de ses sens de rotation.

L'invention a encore pour objet un procédé de fermeture d'un boîtier de transmission comprenant les caractéristiques de la revendication 9.

L'invention a encore pour objet un engin roulant équipé d'un boîtier de transmission, caractérisé en ce que le boîtier de transmission est du type précité.

L'invention sera bien comprise à la lecture de la description suivante d'exemples de réalisation, en référence aux dessins annexés dans lesquels :
- La figure 1 représente une vue d'ensemble d'un engin roulant équipé d'un boîtier de transmission conforme à l'invention.

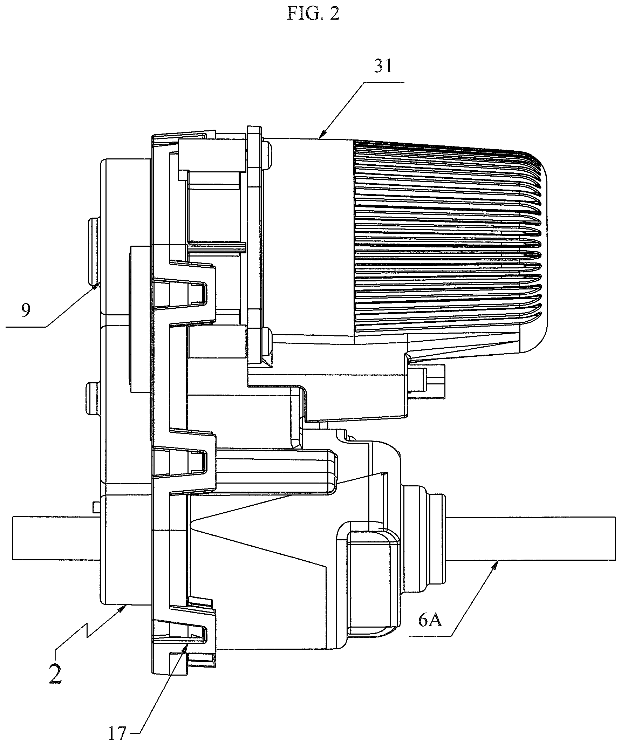

- La figure 2 représente une vue en perspective d'un boîtier de transmission conforme à l'invention.
- La figure 3A représente une vue en position éclatée des éléments la constituant d'un boîtier de transmission conforme à l'invention.
- La figure 3B représente une vue partielle en position éclatée des éléments portés par l'arbre dudit boîtier.
- La figure 4 représente une vue en coupe d'une transmission conforme à l'invention, avec l'arbre réalisé en deux sections d'arbre.
- La figure 5 représente une vue en coupe d'un boîtier de transmission conforme à l'invention, avec l'arbre réalisé d'un seul tenant.
- La figure 6 représente une vue en perspective des éléments de boîtier à l'état non assemblé.
- Les figures 7 et 8 représentent chacune une vue de détail des moyens de maintien par encliquetage.
- La figure 9 représente une vue de détail des moyens de liaison par collage.

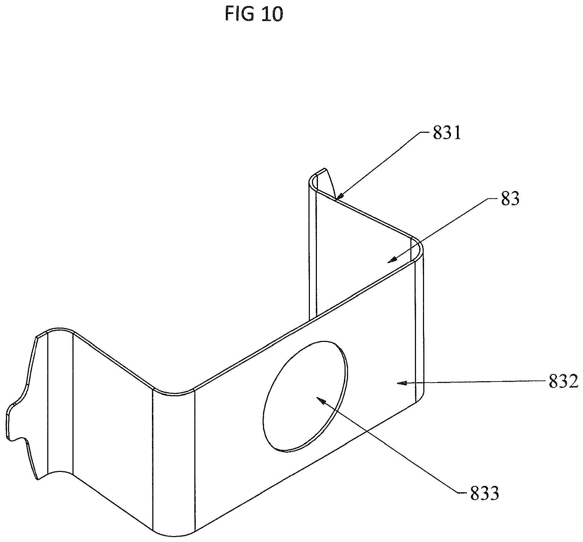

- La figure 10 représente une vue en perspective d'un frein.

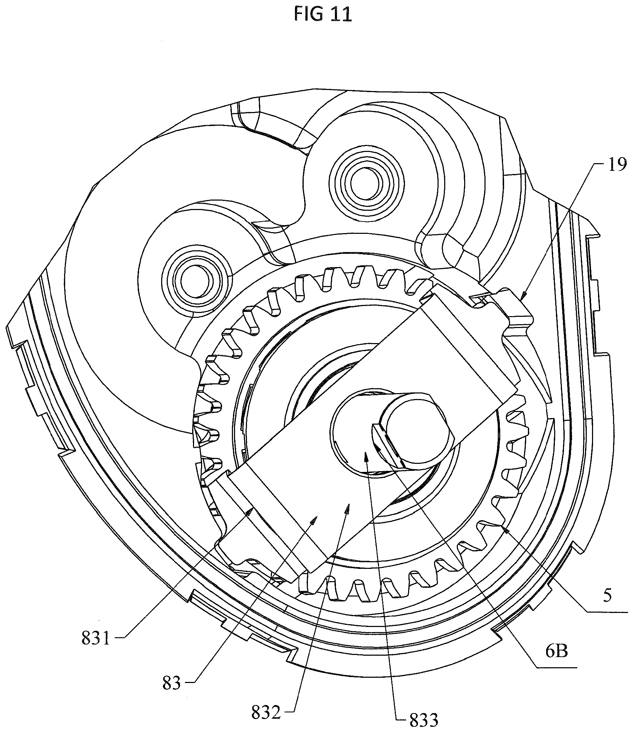

- La figure 11 représente une vue de détail d'un frein, en position sur l'arbre.

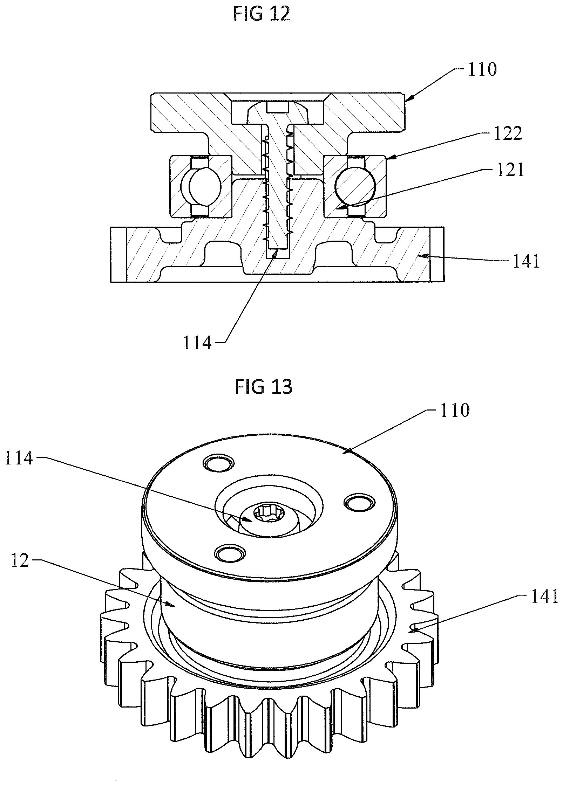

- La figure 12 représente une vue en coupe de la liaison entre train épicycloïdal et mécanisme d'engrenage.
- La figure 13 représente une vue en perspective de la figure 12.

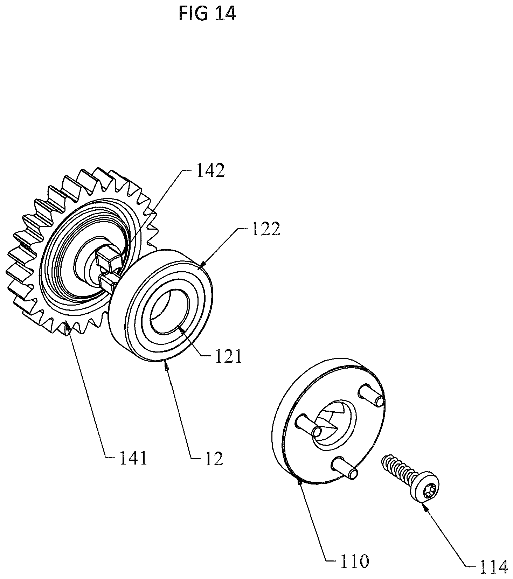

- La figure 14 représente une vue en position éclatée des éléments la constituant de la liaison entre train épicycloïdal et mécanisme d'engrenage.

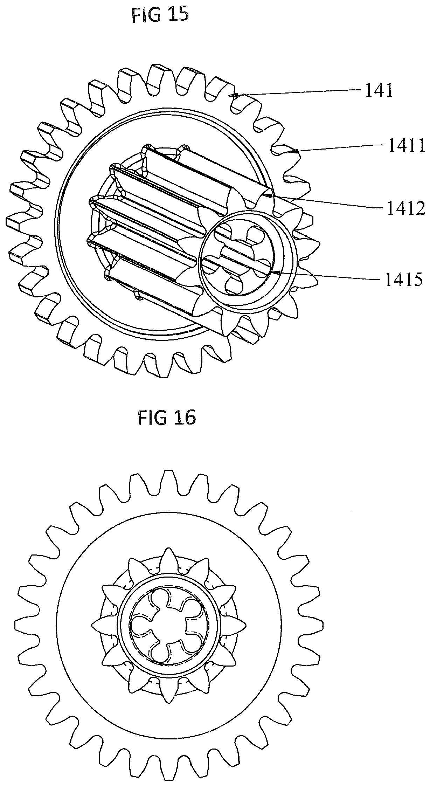

- La figure 15 représente une vue en perspective d'un pignon double.
- La figure 16 représente une vue prise depuis une extrémité d'un pignon double.

Comme mentionné ci-dessus, le boîtier 2 de transmission objet de l'invention est plus particulièrement destiné à être monté sur un engin 1 roulant, notamment à conducteur marchant.

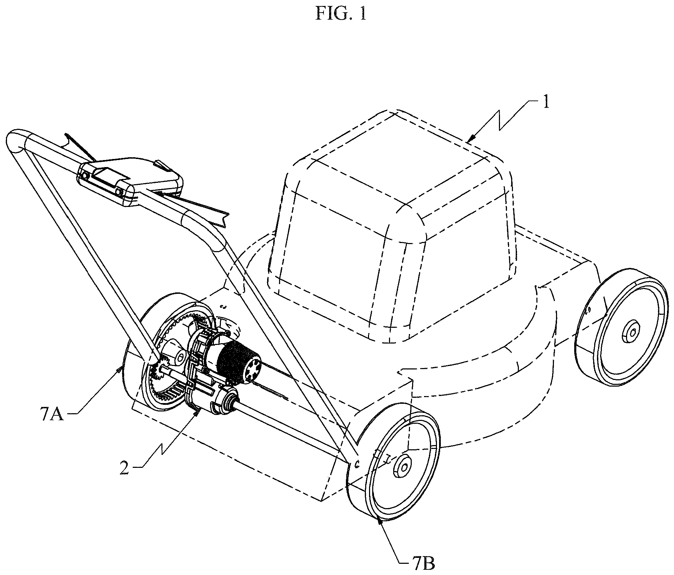

La figure 1 représente l'application d'un tel boîtier de transmission sur une tondeuse à gazon. Cette tondeuse à gazon comporte un châssis roulant, les roues arrière du châssis étant représentées en 7A, 7B aux figures.

Le boîtier 2 stationnaire de transmission est porté par ledit châssis roulant de l'engin. Ce boîtier 2 de transmission, de préférence en matière de synthèse, est formé de deux éléments 9 ou demi-coquilles assemblées par un plan 10 de joint. Ces éléments 9 de boîtier sont donc généralement des pièces moulées, réalisées par injection. Ce boîtier 2 de transmission loge, au moins partiellement, à l'intérieur d'une cavité 13 délimitée par lesdits éléments 9 de boîtier, un arbre 6 formant ici l'arbre d'entraînement des roues 7A, 7B de l'engin et un mécanisme 30 de transmission de mouvement audit arbre.

Ce mécanisme 30 de transmission sera décrit plus en détail ci-après.

Le boîtier 2 de transmission comprend encore des moyens 15 d'étanchéité disposés au niveau de la zone d'applique des éléments de boîtier, cette zone d'applique étant appelée plan 10 de joint. Ces moyens 15 d'étanchéité entourent ladite cavité 13. Ces moyens 15 d'étanchéité sont des moyens 16 de liaison par collage.

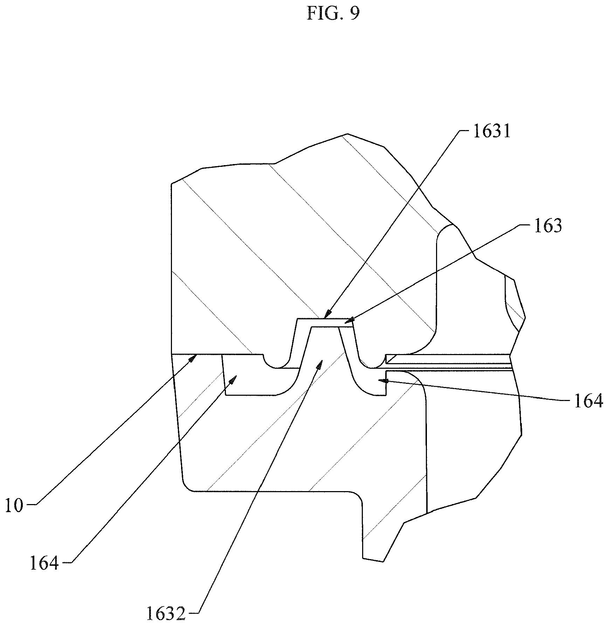

Dans l'exemple représenté à la figure 9, les moyens 16 de liaison par collage comprennent une gorge 163 dite principale de réception de colle, entourant ladite cavité 13, et deux gorges 164 auxiliaires doublant, l'une en direction de l'extérieur du boîtier, l'autre en direction de l'intérieur du boîtier, la gorge 163 principale à l'état assemblé desdits éléments de boîtier.

Bien évidemment, il aurait pu être prévu en variante d'exclure la présence des gorges auxiliaires ou prévoir une seule gorge auxiliaire s'étendant d'un seul côté de la gorge principale.

Dans l'exemple de la figure 9, la gorge 163 principale périphérique comprend un élément 1631 femelle formé par une rainure, porté par un élément 9 de boîtier et un élément 1632 mâle formé par une nervure, porté par l'autre élément de boîtier. L'élément 1632 mâle s'emboîte au moins partiellement dans l'élément 1631 femelle, à l'état assemblé desdits éléments 9 de boîtier.

Chaque gorge auxiliaire est quant à elle simplement formée par une rainure ménagée dans l'un des éléments de boîtier.

De manière caractéristique à l'invention, le boîtier 2 comprend encore des moyens 17 de liaison des éléments 9 de boîtier par encliquetage, pour un maintien des éléments 9 de boîtier en applique l'un contre l'autre.

Ces moyens 17 de liaison par encliquetage permettent à l'opérateur, grâce au maintien automatique et immédiat en applique des éléments de boîtier l'un contre l'autre, de poser ledit boîtier dès que ce dernier est fermé, sans avoir à attendre la prise de la colle, dans le cas d'une liaison par collage desdits éléments 9 de boîtier. Il en résulte un gain de temps supplémentaire.

Ces moyens 17 de liaison des éléments 9 de boîtier par encliquetage comprennent une pluralité d'organes 171 élastiquement déformables s'étendant sur le pourtour de l'un des éléments 9 du boîtier 2, lesdits organes 171 élastiquement déformables étant aptes à coopérer par venue en prise avec des organes 172 complémentaires portés par l'autre élément 9 de boîtier à l'état appliqué l'un contre l'autre des éléments 9 de boîtier.

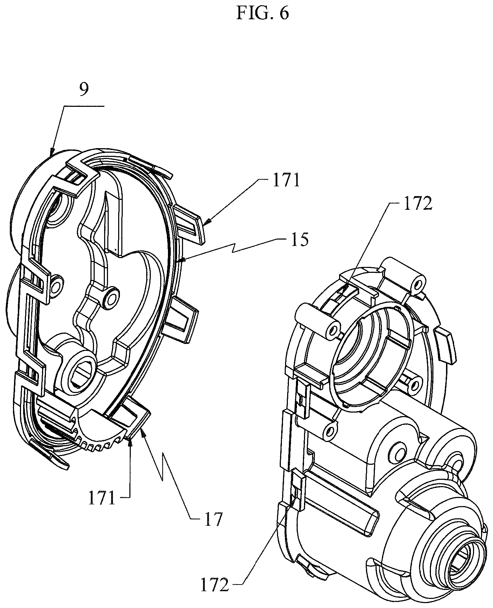

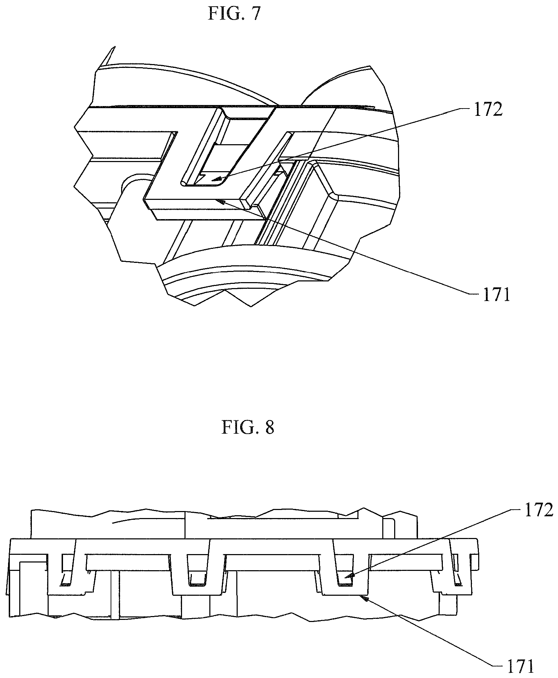

Dans l'exemple représenté aux figures 6 à 8, les moyens 17 de liaison des éléments 9 de boîtier par encliquetage comprennent une pluralité de créneaux 171 évidés en forme d'anses disposés sur le pourtour de l'un des éléments 9 de boîtier pour former ladite pluralité d'organes 171 élastiquement déformables et une pluralité d'ergots 172 ou crans disposés sur le pourtour de l'autre des éléments 9 de boîtier pour former lesdits organes 172 complémentaires, chaque ergot 172 étant apte à s'insérer dans une anse 171 à l'état appliqué l'un contre l'autre des éléments 9 de boîtier.

Ainsi, au cours du rapprochement des éléments de boîtier et du positionnement en applique des éléments de boîtier l'un contre l'autre, chaque anse de l'un des éléments de boîtier tend, par contact d'appui et glissement contre un ergot ou cran de l'autre élément de boîtier, à s'écarter dudit cran ou ergot jusqu'à franchissement de cet ergo ou cran, par le sommet de l'anse.

Une fois que le sommet de l'anse a dépassé l'ergot ou cran, l'anse se resserre autour de l'ergot ou cran, et entoure l'ergot ou cran pour un maintien desdits éléments de boîtier en applique l'un contre l'autre.

Une séparation de l'élément de boîtier dans le sens d'un écartement desdits éléments de boîtier nécessite de provoquer une déformation des anses pour permettre une sortie des crans desdites anses. La simplicité de l'assemblage par encliquetage et sa rapidité de mise en œuvre permettent donc un positionnement immédiat des éléments de boîtier en applique l'un contre l'autre, et un maintien de ladite position dès la dépose de colle au niveau du plan de joint d'au moins l'un des éléments 9 de boîtier, cette dépose de colle s'opérant au niveau de la gorge principale.

Il en résulte donc un procédé de fermeture du boîtier qui comprend simplement une étape de dépose de colle au niveau du plan 10 de joint d'au moins l'un des éléments 9 de boîtier, une étape d'application l'un contre l'autre desdits éléments 9 de boîtier et une étape de maintien à l'état appliqué l'un contre l'autre desdits éléments 9 de boîtier par l'intermédiaire des moyens 17 de liaison par encliquetage équipant lesdits éléments de boîtier.

Comme mentionné ci-dessus, le boîtier 2 est un boîtier de transmission pour un engin 1 roulant et l'arbre 6 qui fait au moins partiellement saillie du boîtier 2 est un arbre d'entrainement de roues 7A, 7B d'une même paire de roues de l'engin. Cet arbre 6 d'entraînement de roues réalisé d'un seul tenant ou en au moins deux sections 6A, 6B d'arbre d'entraînement de roue coaxiales aptes à entraîner chacune une roue 7A, 7B d'une même paire de roues de l'engin s'étend transversalement, de préférence orthogonalement, audit plan 10 de joint à l'état assemblé des deux éléments 9 de boîtier.

Le mécanisme 30 de transmission de mouvement audit arbre 6 d'entrainement de roues comprend des moyens 3 menants moteurs comprenant, un moteur 31 équipé d'un arbre 32 moteur mené s'étendant, de préférence, parallèlement à l'axe longitudinal de l'arbre 6 d'entraînement de roues, un organe 5 mené rotatif, en l'occurrence ici une roue dentée, en prise permanente avec les moyens 3 menants moteurs d'entraînement en rotation dudit organe 5 mené, et disposé entre, l'arbre 6 d'entraînement de roues ou chacune des sections 6A, 6B d'arbre d'entraînement de roue dudit arbre 6 et l'organe 5 mené, un mécanisme 8 d'embrayage. Le ou chaque mécanisme 8 d'embrayage est activé par l'entraînement en rotation de l'organe 5 mené suivant un premier sens d'entraînement en rotation dit marche avant, et désactivable par l'entraînement en rotation en marche avant de l'arbre 6 ou de la section 6A, 6B d'arbre d'entraînement de roue avec lequel il coopère, lorsque la vitesse de rotation de l'arbre 6 ou de ladite section 6A, 6B d'arbre d'entraînement de roue est supérieure à la vitesse de rotation de l'organe 5 mené. L'arbre 6 d'entraînement de roues ou chaque section d'arbre 6A, 6B d'entraînement de roue est, à l'état désactivé du mécanisme 8 d'embrayage correspondant, libre de tourner dans l'un quelconque de ses sens de rotation.

Les moyens 3 menants moteurs comprennent encore, disposé entre l'arbre 32 moteur et la roue 5 dentée, en prise permanente avec ladite roue 5 dentée, un mécanisme 14 d'engrenage et, entre l'arbre 32 moteur et le mécanisme 14 d'engrenage, un train épicycloïdal, ces éléments permettant la transmission du mouvement de rotation de l'arbre 32 moteur à ladite roue 5 dentée.

Il doit être noté que l'arbre 32 moteur peut être entraîné en rotation suivant une direction ou suivant deux directions opposées.

Le mécanisme 14 d'engrenage disposé entre l'arbre 32 moteur et la roue 5 dentée et avec lequel la roue 5 dentée est en prise permanente par engrènement comprend une pluralité de pignons 141 montés chacun à rotation autour d'un axe s'étendant parallèlement à l'arbre 32 moteur et à l'arbre 6 d'entraînement des roues ou à chacune des sections 6A, 6B d'arbre d'entraînement des roues.

Cette pluralité de pignons 141 comprend un pignon 141 monté solidaire en rotation du porte-satellites 110 du train épicycloïdal qui sera décrit ci-après et deux pignons 141 doubles comprenant chacun deux dentures 1411, 1412 de diamètre différent. Lesdits pignons 141 doubles sont identiques d'un pignon à un autre.

Chaque pignon 141 double est porté par un axe 142 support, qui s'étend entre deux éléments de boîtier. Lesdits axes 142 support sont identiques d'un pignon 141 double à un autre, pour une simplicité de fabrication.

Chaque pignon 141 double comprend, montés solidaires en rotation et disposés de manière coaxiale, une roue 1411 dentée apte à former la première denture du pignon 141 et un tube 1412 nervuré apte à former la deuxième denture du pignon, lesdits pignons 141 doubles étant décalés axialement pour permettre audit pignon 141 double dit aval en prise par engrènement avec l'organe 5 mené de venir en prise par sa roue 1411 dentée avec le tube 1412 nervuré du pignon 141 double dit amont positionné par rapport au pignon aval, plus proche de l'arbre 32 moteur.

Chaque pignon 141 double est muni, à l'intérieur de sa roue 1411 dentée, d'un logement 1413 annulaire, et un organe 1414 de roulement est logé dans le pignon 141 double dit amont positionné le plus proche de l'arbre 32 moteur.

Ce pignon 141 double amont vient en prise avec le pignon 141 monté solidaire en rotation du porte-satellites 110 du train 11 épicycloïdal qui sera décrit ci-après.

Chaque pignon 141 double est muni intérieurement d'au moins une gorge 1415 longitudinale, en l'occurrence ici cinq gorges longitudinales. Chaque gorge 1415 est apte à former une réserve de lubrifiant. Chaque gorge longitudinale présente un profil courbe en forme de pétale de fleur ou depuis une extrémité de ladite gorge.

Le train 11 épicycloïdal disposé entre le mécanisme 14 d'engrenage et l'arbre 32 moteur comprend quant à lui un planétaire 111 intérieur monté solidaire en rotation de l'arbre 32 moteur, un planétaire 112 extérieur appelé couronne fixé au boîtier 2, des satellites 113 en prise par engrènement avec les planétaires, et un porte-satellites 110 auquel le mouvement de rotation de l'arbre 32 moteur est transmis via le train 11 épicycloïdal.

Ce porte-satellites 110 forme lui-même, avec le pignon 141 du mécanisme d'engrenage, un ensemble rotatif porté et guidé en rotation, à l'intérieur du boîtier, par un roulement 12 mécanique.

Ce roulement 12 comprend une bague 121 intérieure, à l'intérieur de laquelle ledit ensemble est logé au moins partiellement, et une bague 122 extérieure entourant la bague 121 intérieure.

Les bagues intérieure et extérieure sont des bagues coaxiales montées libres à rotation l'une par rapport à l'autre. La bague 122 est montée fixe à l'intérieur du boîtier 2.

Des organes roulants tels que des billes, aiguilles ou autres, sont disposés entre les bagues intérieure et extérieure pour permettre ce montage libre à rotation desdites bagues l'une par rapport à l'autre. La bague intérieure du roulement est, pour son montage, solidaire en rotation avec le porte-satellites 110 et le pignon 141, prise en sandwich entre le porte-satellites 110 et le pignon 141.

À cet effet, le porte-satellites 110 et le pignon 141 présentent chacun une partie interne à la bague intérieure du roulement, insérée dans la bague, une partie externe à la bague intérieure du roulement et, au niveau de l'interface entre parties interne et externe, un épaulement.

La bague 121 intérieure du roulement 12, qui comprend une face circonférentielle interne, une face circonférentielle externe et deux faces latérales reliant entre elles les faces circonférentielles est prise en sandwich entre le porte-satellites 110 et le pignon 141, au niveau de ses faces latérales, lesdites faces latérales étant enserrées entre les épaulements du porte-satellites 110 et du pignon 141.

Le porte-satellites 110 et le pignon 141 sont, en outre, pour un montage solidaire en rotation, reliés l'un à l'autre par un organe de liaison, en l'occurrence une vis 114, et présentent des formes géométriques complémentaires.

L'entraînement en rotation du planétaire intérieur entraîne en rotation les satellites 113 en prise par engrènement avec la denture circonférentielle interne de la couronne formant le planétaire 112 extérieur. Comme cette couronne est une couronne stationnaire fixée au boîtier, les satellites 113 enfilés chacun sur un axe du porte-satellites tendent à entraîner en rotation le porte-satellites 110, qui lui-même entraîne en rotation le pignon 141 dont il est monté solidaire.

Ce mouvement de rotation est transmis par le mécanisme 14 d'engrenage à la roue 5 dentée, qui est montée libre à rotation sur l'arbre 6 d'entraînement des roues de l'engin.

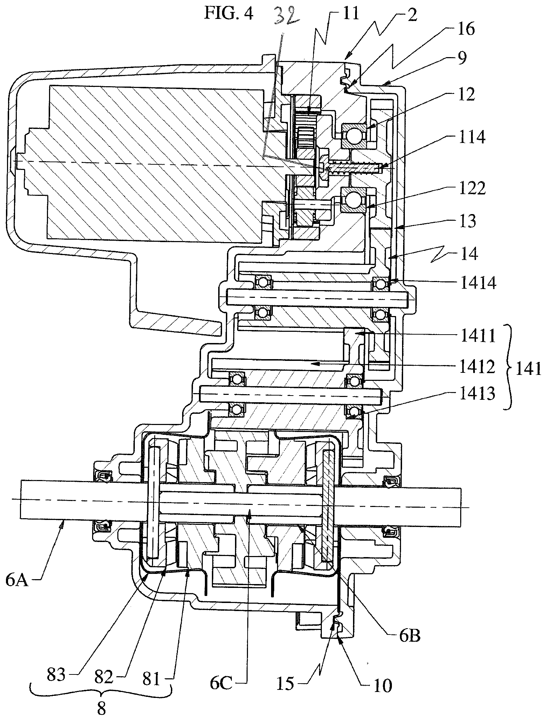

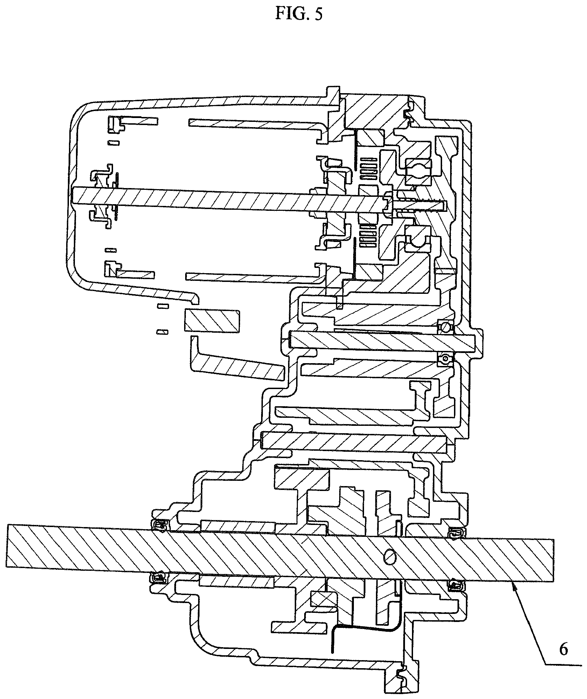

L'arbre d'entraînement des roues de l'engin peut être réalisé d'un seul tenant, comme illustré à la figure 5, ou sous forme de deux sections 6A, 6B d'arbre coaxiales, aptes à entraîner chacune une roue 7A, 7B d'une même paire de roues de l'engin, comme illustré à la figure 4.

Dans ce cas, ces sections 6A, 6B d'arbre sont maintenues alignées par un axe 6C de liaison sur lequel elles sont emmanchées, ces sections 6A, 6B d'arbre étant aptes, à l'état aligné, à être animées d'un déplacement relatif en rotation.

On note que l'axe longitudinal de l'arbre 6 d'entraînement de roues ou l'axe longitudinal de chacune des sections 6A, 6B d'arbre d'entraînement de roue s'étend parallèlement à l'arbre 32 moteur des moyens menants 3 moteurs d'entraînement en rotation de la roue 5 dentée.

Les deux solutions de réalisation de l'arbre d'entraînement de roues décrites ci-dessus diffèrent simplement par le nombre de mécanismes d'embrayage nécessaires au niveau dudit arbre, mais le fonctionnement est similaire.

Il sera donc décrit ici uniquement un fonctionnement avec un arbre sous forme de deux sections 6A, 6B d'arbre, chaque section d'arbre étant équipée d'un mécanisme 8 d'embrayage.

Chaque mécanisme 8 d'embrayage est un embrayage automatique activé par l'entraînement en rotation de la roue 5 dentée suivant un premier sens de rotation dit marche avant, et désactivable par l'entraînement en rotation en marche avant de la section 6A, 6B d'arbre d'entraînement de roue avec lequel il coopère lorsque la vitesse de rotation de ladite section 6A, 6B d'arbre d'entraînement de roue est supérieure à la vitesse de rotation de la roue 5 dentée.

Cette section 6A, 6B d'entraînement de roue est, à l'état désactivé du mécanisme 8 d'embrayage correspondant, libre de tourner dans l'un quelconque de ses sens de rotation.

L'un des mécanismes d'embrayage est apte à transmettre la transmission du mouvement de la roue 5 dentée à la section 6A d'arbre d'entraînement de roue, l'autre la transmission du mouvement de la roue 5 dentée à la section 6B d'arbre d'entraînement de roue.

Ainsi, la roue 5 dentée disposée coaxiale aux sections d'arbre d'entraînement de roue est disposée entre les deux mécanismes 8 d'embrayage, chaque mécanisme 8 d'embrayage étant porté par une section d'arbre d'entraînement de roue.

Chaque mécanisme 8 d'embrayage comprend un plateau 81 d'embrayage monté libre à rotation, sur l'arbre 6 d'entraînement de roues ou sur la section 6A, 6B d'arbre d'entraînement de roue associée, une pièce 82 portée par, et solidaire en rotation de l'arbre 6 d'entraînement de roues ou de la section 6A, 6B d'arbre d'entraînement de roue associée et un frein 83 dudit plateau 81 d'embrayage à action permanente sur la vitesse angulaire dudit plateau 81. Ledit plateau 81 d'embrayage, auquel le mouvement de rotation de l'organe 5 mené est apte à être transmis, est monté mobile axialement dans le sens d'un rapprochement et d'un écartement de l'organe 5 mené et est disposé, à l'état activé, écarté de l'organe 5 mené et en prise avec la pièce 82 portée par, et solidaire en rotation de l'arbre 6 ou de la section 6A, 6B d'arbre d'entraînement de roue, et, à l'état désactivé, rapproché de l'organe 5 mené et désaccouplé de la pièce 82 portée par, et solidaire en rotation de l'arbre 6 ou de la section 6A, 6B d'arbre d'entraînement de roue et ledit frein 83 est enfilé sur l'arbre 6 d'entraînement de roue ou la section 6A, 6B d'arbre d'entraînement de roue associée audit plateau 81.

À l'état activé, le plateau 81 d'embrayage est disposé écarté de la roue 5 dentée, c'est-à-dire éloigné de la roue 5 dentée d'une distance supérieure à celle qui le sépare de la roue 5 dentée à l'état désactivé.

Pour permettre une activation et une désactivation des moyens d'embrayage, le plateau 81 d'embrayage et la pièce 82 de chaque mécanisme d'embrayage, et la roue 5 dentée sont munis, sur au moins l'une de leurs faces, de rampes.

Les rampes 18 d'une face du plateau 81 coopèrent, lors de la phase d'activation, avec les rampes 20 d'une face de la roue 5 dentée, pour un déplacement axial du plateau 81 d'embrayage dans une première direction d'écartement de la roue 5 dentée et de solidarisation du plateau 81 avec la pièce 82 portée par, et solidaire en rotation de, la section 6A, 6B d'arbre d'entraînement de roue qui coopère avec le mécanisme d'embrayage.

Les rampes 21 de l'autre face du plateau 81 coopèrent, lors de la phase de désactivation, avec des rampes 22 de la pièce 82 portée par et solidaire en rotation de la section 6A, 6B d'arbre d'entraînement de roue, pour provoquer, par déplacement axial de sens opposé dudit plateau 81 d'embrayage, la mise en roue libre de la section 6A, 6B d'arbre d'entraînement de roue avec laquelle le mécanisme d'embrayage est apte à coopérer.

Les rampes de la roue 5 dentée et du plateau 81 d'embrayage sont ici formées par l'un des flancs de crénelure ou dents en saillie desdites faces.

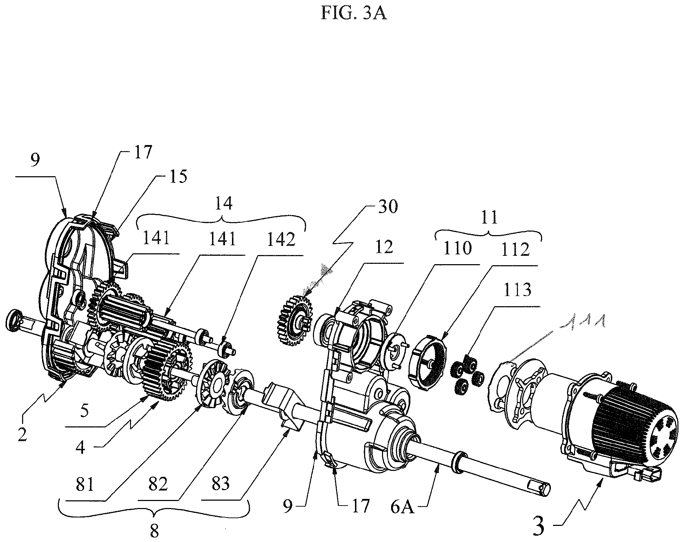

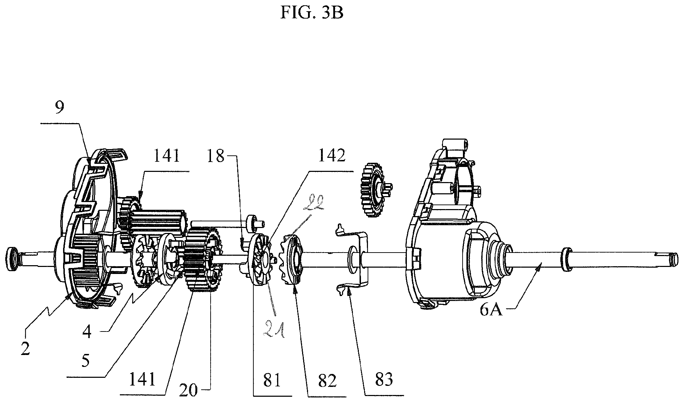

Dans l'exemple représenté à la figure 3B, la roue dentée constitutive de l'organe 5 mené présente, sur chacune de ses faces, une couronne de dents avec chaque dent comportant deux flancs parallèles à l'axe de rotation de l'arbre d'entraînement de roues, chaque flanc étant raccordé au sommet de la dent par un pan coupé.

Le plateau 81 d'embrayage comporte, sur sa face tournée vers l'organe 5 mené, une couronne de dents avec chaque dent comportant un flanc parallèle à l'axe de rotation des sections d'arbre d'entraînement de roue et un flanc incliné formant un angle avec ledit axe de rotation.

Le flanc incliné est formé par la rampe représentée en 18 aux figures. Ce flanc est le flanc sollicité lors de l'entraînement en marche avant de l'organe 5 mené par contact d'appui avec une dent de l'organe 5 mené pour provoquer un déplacement axial du plateau d'embrayage dans le sens d'un écartement de l'organe 5 mené.

L'autre face du plateau, c'est-à-dire celle tournée vers la pièce 82 solidaire en rotation de la section d'arbre d'entraînement de roues, qui est ici formée par une roue à rampes, comporte, de la même manière une couronne de dents à flancs, l'un droit, l'autre incliné.

La pièce 82 ou roue solidaire en rotation de la section d'arbre d'entraînement de roue comporte également une couronne de dents dont chaque dent présente l'un de ses flancs incliné et l'autre flanc droit.

Pour chaque dent du plateau 81 et de la pièce 82, un flanc droit d'une dent du plateau coopère avec un flanc droit d'une dent de la pièce 82 solidaire en rotation de la section d'arbre d'entraînement de roue lors de l'entraînement en marche avant de l'organe 5 mené, à l'état écarté du plateau 81 d'embrayage de l'organe 5 mené.

Cette coopération par contact d'appui se poursuit tant que la vitesse d'entraînement en rotation de la section d'arbre d'entraînement de roue est inférieure à la vitesse de l'organe 5 mené. Lorsque la vitesse d'entraînement en rotation de roue devient supérieure à la vitesse de rotation de l'organe 5 mené, par exemple lors d'une prise de virage avec la roue de l'arbre formant la roue extérieure dans ledit virage, la section d'arbre d'entraînement et sa pièce 82 deviennent menantes, de sorte que chaque dent de la pièce 82 coopère au niveau de son flanc incliné formant rampe 22 par contact d'appui avec le flanc incliné formant rampe 21 des dents du plateau d'embrayage, pour provoquer un déplacement axial du plateau d'embrayage dans le sens d'un rapprochement de l'organe 5 mené, jusqu'à une position désaccouplée desdites rampes correspondant à l'état désactivé du mécanisme d'embrayage.

Pour permettre un fonctionnement optimal de ce mécanisme d'embrayage, le plateau 81 d'embrayage est freiné à l'aide d'un frein 83. Le frein 83 est un organe de freinage par friction actif par contact d'appui permanent sur le bord périphérique externe, encore appelé chant ou tranche, du plateau 81 d'embrayage.

Le frein 83 du ou de chaque mécanisme 8 d'embrayage comprend deux lames 831 ressort s'étendant le long de l'arbre 6 d'entraînement de roues ou de la section 6A ; 6B d'arbre d'entraînement de roue associée audit mécanisme 8 d'embrayage et une zone 832 de liaison desdites lames 831 ressort entre elles. Lesdites lames 831 ressort sont montées de manière fixe en rotation autour de l'arbre 6 ou de la section 6A, 6B d'arbre d'entraînement de roue et de manière diamétralement opposée par rapport à l'arbre 6 d'entraînement ou à ladite section 6A, 6B d'arbre d'entraînement de roue et ladite zone 832 de liaison, disposée à, ou au voisinage d'une des extrémités des lames 831 ressort, est munie d'un orifice 833 traversant pour permettre d'enfiler ledit frein 83 sur l'arbre 6 d'entraînement de roues ou sur la section 6A, 6B d'arbre d'entraînement de roue associée audit plateau 81 d'embrayage.

En d'autres termes, le frein de plateau est monté fixe en rotation autour de la section d'arbre d'entraînement de roue associée audit plateau. Le frein de plateau affecte la forme générale d'un U avec les branches du U s'étendant le long de la section d'arbre d'entraînement de roue associée audit plateau et l'âme du U munie d'un orifice traversant pour permettre d'enfiler ledit frein sur la section d'arbre d'entraînement de roue associée audit plateau.

Le frein de plateau est formé d'un flan plié et découpé. Il en résulte une simplicité de fabrication dudit frein.

Les lames ressort sont, pour leur montage fixe à rotation, recourbées à leur extrémité libre pour former une languette apte à coulisser dans une rainure 19 axiale du boîtier.

Tous les moyens décrits ci-dessus sont au moins partiellement logés à l'intérieur du boîtier 2, comme mentionné ci-dessus.

## Revendications

1. Boîtier (2) de transmission du type comprenant deux éléments (9) de boîtier positionnables en applique l'un contre l'autre et délimitant à l'état assemblé une cavité (13), un arbre (6) faisant au moins partiellement saillie du boîtier, un mécanisme (30) de transmission de mouvement audit arbre (6), ce mécanisme (30) de transmission de mouvement étant logé au moins partiellement à l'intérieur de la cavité (13) du boîtier (2) et des moyens (15) d'étanchéité disposés au niveau de la zone d'applique des éléments (9) de boîtier et appelée plan (10) de joint, ces moyens (15) d'étanchéité entourant ladite cavité (13), ces moyens (15) d'étanchéité étant des moyens (16) de liaison par collage des éléments (9) de boîtier, les moyens (16) de liaison par collage comprenant une gorge (163) dite principale de réception de colle entourant ladite cavité (13), **caractérisé en ce que** ladite gorge (163) principale comprend un élément (1631) femelle porté par un élément (9) de boîtier, et un élément (1632) mâle porté par l'autre élément (9) de boîtier avec l'élément (1632) mâle s'emboîtant au moins partiellement dans l'élément (1631) femelle à l'état assemblé desdits éléments (9) de boîtier, **en ce que** l'élément (1631) femelle porté par un élément (9) de boîtier de la gorge (163) principale est une rainure et l'élément (1632) mâle porté par l'autre élément (9) de boîtier de la gorge (163) principale est une nervure et **en ce que** le boîtier (2) comprend des moyens (17) de liaison des éléments (9) de boîtier par encliquetage pour un maintien des éléments (9) de boîtier en applique l'un contre l'autre.

2. Boîtier (2) selon la revendication 1,
**caractérisé en ce que** les moyens (16) de liaison par collage comprennent au moins une gorge (164) auxiliaire doublant la gorge (163) principale à l'état assemblé desdits éléments de boîtier.

3. Boîtier (2) selon la revendication 2,
**caractérisé en ce que** la ou au moins l'une des gorges (164) auxiliaires double ladite gorge (163) principale extérieurement, en entourant ladite gorge (163) principale.

4. Boîtier (2) selon l'une des revendications 2 ou 3,
**caractérisé en ce que** la ou au moins l'une des gorges (164) auxiliaires double ladite gorge (163) principale intérieurement, en s'étendant à l'intérieur du périmètre délimité par la gorge (163) principale.

5. Boîtier (2) selon l'une des revendications 1 à 4,
**caractérisé en ce que** les moyens (17) de liaison des éléments (9) de boîtier par encliquetage comprennent une pluralité d'organes (171) élastiquement déformables s'étendant sur le pourtour de l'un des éléments (9) du boîtier, lesdits organes (171) élastiquement déformables étant aptes à coopérer par venue en prise avec des organes (172) complémentaires portés par l'autre élément (9) de boîtier à l'état appliqué l'un contre l'autre des éléments (9) de boîtier.

6. Boîtier (2) selon la revendication 5,
**caractérisé en ce que** les moyens (17) de liaison des éléments (9) de boîtier par encliquetage comprennent une pluralité de créneaux (171) évidés en forme d'anses disposés sur le pourtour de l'un des éléments (9) de boîtier pour former ladite pluralité d'organes (171) élastiquement déformables et une pluralité d'ergots (172) disposés sur le pourtour de l'autre des éléments (9) de boîtier pour former lesdits organes (172) complémentaires, chaque ergot (172) étant apte à s'insérer dans une anse (171) à l'état appliqué l'un contre l'autre des éléments (9) de boîtier.

7. Boîtier (2) selon l'une des revendications précédentes,
**caractérisé en ce que** le boîtier (2) est un boîtier (2) de transmission pour un engin (1) roulant et **en ce que** l'arbre (6) qui fait au moins partiellement saillie du boîtier (2) est un arbre d'entrainement de roues d'une même paire de roues (7A, 7B) de l'engin, cet arbre (6) d'entraînement de roues réalisé d'un seul tenant ou en au moins deux sections (6A ; 6B) d'arbre d'entraînement de roue coaxiales aptes à entraîner chacune une roue (7A ; 7B) d'une même paire de roues de l'engin s'étendant transversalement, de préférence orthogonalement, audit plan (10) de joint à l'état assemblé des deux éléments (9) de boîtier.

8. Boîtier (2) selon la revendication 7,
**caractérisé en ce que** le mécanisme (30) de transmission de mouvement audit arbre (6) d'entrainement de roues comprend des moyens (3) menants moteurs, un organe (5) mené rotatif, tel qu'une roue dentée, en prise permanente avec les moyens (3) menants moteurs d'entraînement en rotation dudit organe (5) mené, lesdits moyens (3) menants moteurs comprenant un moteur (31) équipé d'un arbre (32) moteur mené s'étendant, de préférence, parallèlement à l'axe longitudinal de l'arbre (6) d'entraînement de roues et, disposé entre l'arbre (6) d'entraînement de roues, ou chacune des sections (6A ; 6B) d'arbre d'entraînement de roue, et l'organe (5) mené, un mécanisme (8) d'embrayage, le ou chaque mécanisme (8) d'embrayage, étant activé par l'entraînement en rotation de l'organe (5) mené suivant un premier sens d'entraînement en rotation dit marche avant, et désactivable par l'entraînement en rotation en marche avant de l'arbre (6) ou de la section (6A ; 6B) d'arbre d'entraînement de roue avec lequel il coopère, lorsque la vitesse de rotation de l'arbre (6) ou de ladite section (6A ; 6B) d'arbre d'entraînement de roue est supérieure à la vitesse de rotation de l'organe (5) mené, l'arbre (6) d'entraînement de roues ou chaque section d'arbre (6A ; 6B) d'entraînement de roue étant, à l'état désactivé du mécanisme (8) d'embrayage correspondant, libre de tourner dans l'un quelconque de ses sens de rotation.

9. Procédé de fermeture d'un boîtier (2) de transmission comprenant deux éléments (9) de boîtier positionnables en applique l'un contre l'autre et délimitant à l'état assemblé une cavité (13), un arbre (6) faisant au moins partiellement saillie du boîtier (2), un mécanisme (30) de transmission de mouvement audit arbre (6), ce mécanisme (30) de transmission de mouvement étant logé au moins partiellement à l'intérieur de la cavité (13) du boîtier (2), et des moyens (15) d'étanchéité s'étendant au niveau de la zone d'applique des éléments de boîtier et appelée plan (10) de joint, ces moyens (15) d'étanchéité entourant ladite cavité (13), ces moyens (15) d'étanchéité étant des moyens (16) de liaison par collage comprenant une gorge (163) dite principale de réception de colle entourant ladite cavité (13),
**caractérisé en ce que** ladite gorge (163) principale périphérique comprenant un élément (1631) femelle, qui est une rainure, porté par un élément (9) de boîtier et un élément (1632) mâle, qui est une nervure, porté par l'autre élément (9) de boîtier, ledit procédé comprend une étape de dépose de colle au niveau de la gorge principale et une étape d'application l'un contre l'autre desdits éléments de boîtier avec l'élément (1632) mâle d'un élément (9) de boîtier s'emboitant au moins partiellement dans l'élément (1631) femelle de l'autre élément (9) de boîtier et **en ce que** le boîtier (2) comprenant des moyens (17) de liaison des éléments (9) de boîtier par encliquetage pour un maintien des éléments (9) de boîtier en applique l'un contre l'autre, ledit procédé comprend, lors de l'étape d'application l'un contre l'autre des éléments de boîtier, une étape d'encliquetage desdits moyens (17) de liaison par encliquetage pour un maintien l'un contre l'autre desdits éléments (9) de boîtier jusqu'à prise de la colle.

10. Engin (1) roulant équipé d'un boîtier (2) de transmission,
**caractérisé en ce que** le boîtier (2) de transmission est conforme à l'une des revendications 1 à 8.

## Patentansprüche

1. Übersetzungsgetriebekasten (2) des Typs, umfassend zwei Kastenelemente (9), die aneinander anliegend positionierbar sind und im zusammengefügten Zustand einen Hohlraum (13) begrenzen, eine Welle (6), die mindestens zum Teil aus dem Kasten herausragt, einen Mechanismus (30) zur Bewegungsübertragung auf die Welle (6), wobei dieser Bewegungsübertragungsmechanismus (30) mindestens zum Teil in dem Hohlraum (13) des Kastens (2) untergebracht ist, und Dichtungsmittel (15), die im Bereich der Anliegezone der Kastenelemente (9) angeordnet sind und als Verbindungsebene (10) bezeichnet wird, wobei diese Dichtungsmittel (15) den Hohlraum (13) umgeben, wobei diese Dichtungsmittel (15) Verbindungsmittel (16) durch Kleben der Kastenelemente (9) sind, wobei die Verbindungsmittel (16) durch Kleben eine Klebstoffhauptaufnahmenut (163) umfassen, die den Hohlraum (13) umgibt,
**dadurch gekennzeichnet, dass** die Hauptnut (163) ein weibliches Element (1631) umfasst, das von einem Kastenelement (9) getragen wird, und ein männliches Element (1632), das von dem anderen Kastenelement (9) getragen wird, mit dem männlichen Element (1632), das mindestens zum Teil in das weibliche Element (1631) im zusammengefügten Zustand der Kastenelemente (9) einrastet, und dass das weibliche Element (1631), das von einem Kastenelement (9) der Hauptnut (163) getragen wird, eine Rille ist, und das männliche Element (1632), das von dem anderen Kastenelement (9) der Hauptnut (163) getragen wird, eine Rippe ist und dass der Kasten (2) Verbindungsmittel (17) der Kastenelemente (9) durch Rasten für einen aneinander anliegenden Halt der Kastenelemente (9) umfasst.

2. Kasten (2) nach Anspruch 1,
**dadurch gekennzeichnet, dass** die Verbindungsmittel (16) durch Kleben mindestens eine Hilfsnut (164) umfassen, die die Hauptnut (163) in zusammengefügten Zustand der Kastenelemente doppelt.

3. Kasten (2) nach Anspruch 2,
**dadurch gekennzeichnet, dass** die oder mindestens eine der Hilfsnuten (164) die Hauptnut (163) außen doppelt, indem sie die Hauptnut (163) umgibt.

4. Kasten (2) nach einem der Ansprüche 2 oder 3,
**dadurch gekennzeichnet, dass** die oder mindestens eine der Hilfstnuten (164) die Hauptnut (163) innen doppelt, indem sie sich im Inneren des von der Hauptnut (163) begrenzten Umfangs erstreckt.

5. Kasten (2) nach einem der Ansprüche 1 bis 4,
**dadurch gekennzeichnet, dass** die Verbindungsmittel (17) der Kastenelemente (9) durch Rasten einen Vielzahl elastisch verformbarer Organe (171) umfassen, die sich auf dem Umfang von einem der Elemente (9) des Kastens erstrecken, wobei die elastisch verformbaren Organe (171) imstande sind, durch Eingreifen mit komplementären Organen (172), die von dem anderen Kastenelement (9) getragen werden, im auf dem anderen der Kastenelemente (9) anliegenden Zustand zusammenzuwirken.

6. Kasten (2) nach Anspruch 5,
**dadurch gekennzeichnet, dass** die Verbindungsmittel (17) der Kastenelemente (9) durch Rasten eine Vielzahl von ausgehöhlten Zacken (171) in Form von Henkeln umfassen, die auf dem Umfang von einem der Kastenelemente (9) angeordnet sind, um die Vielzahl elastisch verformbarer Organe (171) zu bilden, und eine Vielzahl von Vorsprüngen (172), die auf dem Umfang des anderen der Kastenelemente (9) angeordnet sind, um die komplementären Organe (172) zu bilden, wobei jeder Vorsprung (172) imstande ist, sich im aneinander anliegenden Zustand der Kastenelemente (9) in einen Henkel (171) einzufügen.

7. Kasten (2) nach einem der vorangehenden Ansprüche,
**dadurch gekennzeichnet, dass** der Kasten (2) ein Getriebekasten (2) für ein rollendes Gerät (1) ist und das die Welle (6), die mindestens zum Teil aus dem Kasten (2) herausragt, eine Antriebswelle von Rädern desselben Radpaars (7A, 7B) des Geräts ist, wobei sich diese Radantriebswelle (6), die einteilig oder aus mindestens zwei koaxialen Radantriebswellen-Abschnitten (6A; 6B) hergestellt ist, die imstande sind, jeweils ein Rad (7A; 7B) desselben Radpaars des Geräts anzutreiben, transversal, vorzugsweise orthogonal, zur Verbindungsebene (10) im zusammengefügten Zustand der zwei Kastenelemente (9) erstreckt.

8. Kasten (2) nach Anspruch 7,
**dadurch gekennzeichnet, dass** der Mechanismus (30) zur Bewegungsübertragung auf die Radantriebswelle (6) führende Motormittel (3), ein geführtes Rotationsorgan (5) wie ein Zahnrad in ständigem Eingriff mit den führenden Motormitteln (3) zum Rotationsantrieb des geführten Organs (5) umfasst, wobei die führenden Motormittel (3) einen Motor (31) umfassen, der mit einer geführten Motorwelle (32) ausgestattet ist, die sich vorzugweise parallel zur Längsachse der Radantriebswelle (6) erstreckt und, angeordnet zwischen der Radantriebswelle (6) oder jedem der Radantriebswellen-Abschnitte (6A; 6B), und dem geführte Organ (5), einen Kupplungsmechanismus (8), wobei der oder jeder Kupplungsmechanismus (8) durch den Rotationsantrieb des geführten Organs (5) gemäß einer ersten Rotationsantriebsrichtung, bezeichnet als Vorwärtsfahrt, aktiviert ist, und durch den Rotationsantrieb in Vorwärtsrichtung der Welle (6) oder des Radantriebswellen-Abschnitts (6A; 6B) deaktivierbar ist, mit dem er zusammenwirkt, wenn die Rotationsgeschwindigkeit der Welle (6) oder des Radantriebswellen-Abschnitts (6A; 6B) größer als die Rotationsgeschwindigkeit des geführten Organs (5) ist, wobei die Radantriebswelle (6) oder jeder Radantriebswellen-Abschnitt (6A; 6B) im deaktivierten Zustand des entsprechenden Kupplungsmechanismus (8) frei ist, in einer beliebigen seiner Rotationsrichtungen zu drehen.

9. Verfahren zum Verschließen eines Übersetzungsgetriebekastens (2), umfassend zwei aneinander anliegend positionierbare Kastenelemente, die im zusammengefügten Zustand einen Hohlraum (13) begrenzen, eine Welle (6), die mindestens zum Teil aus dem Kasten (2) herausragt, einen Mechanismus (30) zur Bewegungsübertragung auf die Welle (6), wobei dieser Bewegungsübertragungsmechanismus (30) mindestens zum Teil in dem Hohlraum (13) des Kastens (2) untergebracht ist, und Dichtungsmittel (15), die sich im Bereich der Anliegezone der Kastenelemente (9) erstrecken, die als Verbindungsebene (10) bezeichnet wird, wobei diese Dichtungsmittel (15) den Hohlraum (13) umgeben, wobei diese Dichtungsmittel (15) Verbindungsmittel (16) durch Kleben sind, umfassend eine Klebstoffhauptaufnahmenut (163), die den Hohlraum (13) umgibt,
**dadurch gekennzeichnet, dass** die periphere Hauptnut (163) ein weibliches Element (1631) umfasst, das eine Rille ist, getragen von einem Kastenelement (9), und ein männliches Element (1632), das eine Rippe ist, getragen von dem anderen Kastenelement (9), wobei das Verfahren einen Schritt des Aufbringens von Klebstoff im Bereich der Hauptnut umfasst und einen Schritt des aneinander Anlegens des anderen der Kastenelemente an das männliche Element (1632) eines Kastenelements (9), das mindestens zum Teil im weiblichen Element (1631) des anderen Kastenelements (9) rastet und dass der Kasten (2) Verbindungsmittel (17) der Kastenelemente (9) durch Rasten für einen aneinander anliegenden Halt der Kastenelemente (9) umfasst, wobei das Verfahren bei dem Schritt des aneinander Anlegens der Kastenelemente einen Rastschritt der Verbindungsmittel (17) durch Rasten für einen Halt aneinander der Kastenelemente (9) bis zum Binden des Klebstoffs umfasst.

10. Rollendes Gerät (1), ausgestattet mit einem Übersetzungsgetriebekasten (2),
**dadurch gekennzeichnet, dass** der Übersetzungsgetriebekasten (2) nach einem der Ansprüche 1 bis 8 ist.

## Claims

1. A housing (2) for a transmission of the type comprising two housing elements (9) that can be positioned to press against each other and that delimit, in the assembled state, a cavity (13), a shaft (6) at least partially projecting from the housing, a movement transmission mechanism (30) for transmitting movement to said shaft (6), this movement transmission mechanism (30) being housed at least partially inside the cavity (13) of the housing (2) and sealing means (15) arranged in the zone where the housing elements (9) are pressed against each other and called join plane (10), these sealing means (15) surrounding said cavity (13), these sealing means (15) being adhesive connection means (16) of the housing elements (9), the adhesive connection means (16) comprising a so-called main channel (163) for receiving adhesive surrounding said cavity (13),
**characterized in that** said main channel (163) comprises a female element borne by one housing element (9), and a male element (1632) borne by the other housing element (9) with the male element (1632) fitting at least partially in the female element (1631) in the assembled state of said housing elements (9), **in that** the female element (1631) borne by a housing element (9) of the main channel (163) is a groove and the male element (1632) borne by the other housing element (9) of the main channel (163) is a rib and **in that** the housing (2) comprises connection means (17) for connecting the housing elements (9) by snap fit in order to keep the housing elements (9) pressed against one another.

2. The housing (2) according to claim 1,
**characterized in that** the adhesive connection means (16) comprise at least one auxiliary channel (164) running parallel to the main channel (163) in the assembled state of said housing elements.

3. The housing (2) according to claim 2,
**characterized in that** the or at least one of the auxiliary channels (164) runs parallel to said main channel (163) externally, while surrounding said main channel (163).

4. The housing (2) according to one of claims 2 or 3,
**characterized in that** the or at least one of the auxiliary channels (164) runs parallel to said main channel (163) internally, by extending inside the perimeter delimited by the main channel (163).

5. The housing (2) according to one of claims 1 to 4,
**characterized in that** the connection means (17) for connecting the housing elements (9) by snap fit comprise a plurality of resiliently deformable members (171) extending over the perimeter of one of the elements (9) of the housing, said resiliently deformable members (171) being able to cooperate by engagement with complementary members (172) borne by the other housing element (9) in its state pressed against the other housing elements 9.

6. The housing (2) according to claim 5,
**characterized in that** the connection means (17) for connecting the housing elements (9) by snap fit comprise a plurality of hollow indentations (171) in the form of loops arranged on the perimeter of one of the housing elements (9) in order to form said plurality of resiliently deformable members (171) and a plurality of lugs (172) arranged on the perimeter of the other of the housing elements (9) in order to form said complementary members (172), each lug (172) being able to be inserted into a loop (171) when the housing elements (9) are pressed against one another.

7. The housing (2) according to one of the preceding claims,
**characterized in that** the housing (2) is a transmission housing (2) for a wheeled vehicle (1) and **in that** the shaft (6) that protrudes at least partially from the housing (2) is a wheel drive shaft of a same pair of wheels (7A, 7B) of the vehicle, this wheel drive shaft (6) made in a single piece or in at least two wheel drive shaft sections (6A; 6B) each able to drive a wheel (7A; 7B) of a same pair of wheels of the vehicle extending transversely, preferably orthogonally, to said join plane (10) when the two housing elements (9) are in the assembled state.

8. The housing (2) according to claim 7,
**characterized in that** the mechanism (30) for transmitting movement to said wheel drive shaft (6) comprises motor drive means (3), a rotary driven member (5), such as a toothed wheel, permanently engaged with the motor drive means (3) for driving the rotation of said driven member (5), said motor drive means (3) comprising a motor (31) equipped with a driven motor shaft (32) preferably extending parallel to the longitudinal axis of the wheel drive shaft (6) and, arranged between the wheel drive shaft (6), or each of the wheel drive shaft sections (6A; 6B), and the driven member (5), a clutch mechanism (8), the or each clutch mechanism (8) being activated by driving the driven member (5) in rotation in a first rotational drive direction referred to as the "forward" direction, and able to be deactivated by driving the shaft (6) or the wheel drive shaft section (6A; 6B) with which it cooperates in rotation in the forward direction when the rotation speed of the shaft (6) or said wheel drive shaft section (6A; 6B) is greater than the speed of rotation of the driven member (5), the wheel drive shaft (6) or each wheel drive shaft section (6A; 6B) being, in the deactivated state of the corresponding clutch mechanism (8), free to rotate in either of its directions of rotation.

9. A method of closing a transmission housing (2) comprising two housing elements (9) able to be positioned pressing against one another and delimiting, in the assembled state, a cavity (13), a shaft (6) at least partially protruding from the housing (2), a mechanism (30) for transmitting movement to said shaft (6), this movement transmission mechanism (30) being housed at least partially inside the cavity (13) of the housing (2), and sealing means (15) extending at the application zone of the housing elements and called join plane (10), these sealing means surrounding said cavity (13), these sealing means (15) being adhesive connection means (16) comprising a so-called main channel (163) for receiving adhesive surrounding said cavity (13), **characterized in that** said peripheral main channel (163) comprising a female element (1631), which is a groove, borne by one housing element (9), and a male element (1632), which is a rib, borne by the other housing element (9), said method comprises a step for depositing adhesive at the main channel and a step for pressing said housing elements against one another with the male element (1632) of one housing element (9) fitting at least partially in the female element (1631) of the other housing element (9) and **in that** the housing (2) comprising connection means (17) for connecting the housing elements (9) by snap fit in order to keep the housing elements (9) pressed against one another, said method comprises, during the step for pressing the housing elements against one another, a step for snap fitting of said connection means (17) by snap fitting in order to keep said housing elements (9) against one another until the adhesive sets.

10. A wheeled vehicle (1) equipped with a transmission housing (2),
**characterized in that** the transmission housing (2) is according to one of claims 1 to 8.
